# FASCICULE DE BREVET EUROPEEN

(11) **EP 3 146 369 B1**
(45) Date de publication et mention de la délivrance du brevet: **16.03.2022**
(21) Numéro de dépôt: 15732316.3
(22) Date de dépôt: 21.05.2015
(51) Int. Cl.: G02B 5/08, G02B 5/20, A47G 1/00, C03C 17/36

(54) **MIROIR COLORE**
FARBIGER SPIEGEL
COLOURED MIRROR

(30) Priorité: 21.05.2014 FR 1454574
(43) Date de publication de la demande: 29.03.2017
(73) Titulaire: SAINT-GOBAIN GLASS FRANCE, 92400 Courbevoie (FR)
(72) Inventeur: BON SAINT COME, Yémina, F-75004 Paris (FR); MEUNIER, Elodie, F-91300 Massy (FR); GEORGES, Benoit, P.O. Box 261107 Tiffany Tower - Floor 40 Jumeirah Lakes towers, Plot W Dubau - U.A.E. (AE); MOREAU,Virginie, 60200 Compiegne (FR)
(74) Mandataire: Saint-Gobain Recherche
(86) Numéro de dépôt international: PCT/FR2015/051338
(87) Numéro de publication internationale: WO 2015/177474

(56) Documents cités:
- WO-A1-2011/099968
- FR-A1- 2 981 461
- YANG Y ET AL: "Plasmonic degradation and the importance of over-coating metal nanoparticles for a plasmonic solar cell", SOLAR ENERGY MATERIALS AND SOLAR CELLS, ELSEVIER SCIENCE PUBLISHERS, AMSTERDAM, NL, vol. 122, 31 décembre 2013 (2013-12-31), pages 208-216, XP028817627, ISSN: 0927-0248, DOI: 10.1016/J.SOLMAT.2013.12.009
- LEITNER A ET AL: "Optical properties of a metal island film close to a smooth metal surface", APPLIED OPTICS, OPTICAL SOCIETY OF AMERICA, WASHINGTON, DC; US, vol. 32, no. 1, 1 janvier 1993 (1993-01-01), pages 102-110, XP002574134, ISSN: 0003-6935, DOI: 10.1364/AO.32.000102
- M Friz ET AL: "Coating Materials", Umicore Technical Library, 12 juin 2003 (2003-06-12), pages 105-130, XP055114783, Extrait de l'Internet: URL:http://www.thinfilmproducts.umicore.co m/Library/LibraryArchive/show_article_coat ing_materials_12june03.pdf [extrait le 2014-04-22]

## Description

L'invention concerne un miroir coloré ainsi que son procédé de fabrication.

Un miroir coloré au sens de l'invention est un miroir absorbant certaines longueurs d'onde afin d'imposer au miroir une couleur de réflexion qui n'est pas neutre mais qui présente une couleur de réflexion à dominance spécifique.

Le procédé de l'invention permet d'adapter la couleur de l'image produite en réflexion par le miroir.

Un miroir comporte de manière connue un substrat transparent, généralement en verre, et une couche métallique réfléchissante, le plus souvent en argent, dont la réflexion lumineuse est extrêmement élevée au regard des longueurs d'onde du domaine du visible, de façon à fournir une bonne image en réflexion.

L'invention est relative aux miroirs pour lesquels un utilisateur souhaite se mirer ou visualiser la réflexion d'un objet. L'application aux miroirs de l'invention est donc tournée vers les miroirs à usage décoratif ou usage fonctionnel au regard d'un sujet à réfléchir. Les miroirs selon l'invention sont de préférence des miroirs d'intérieur. Ils sont notamment exposés aux problèmes de corrosion qui peuvent exister dans l'air ambiant en raison des polluants présents dans l'atmosphère. Il est donc important qu'ils présentent une durabilité suffisante pour les applications recherchées. De façon générale, ces miroirs présentent préférentiellement une réflectivité lumineuse d'au moins 50% dans le domaine du visible, c'est-à-dire pour des longueurs d'onde comprises entre 380 et 780 nm (mesurée sous illuminant D65, avec un angle d'observation de 10°).

De plus en plus, on souhaite pouvoir proposer des miroirs de différentes couleurs, par exemple avec une couleur de réflexion dont le ton tend vers le rose pour fournir un effet « bonne mine » lorsqu'une personne se regarde dans le miroir.

A titre d'autre exemple de fonctionnalité d'un miroir de l'invention pour visualiser une image en réflexion d'un sujet, citons un miroir qui compense/atténue la couleur d'un éclairage artificiel. En effet, la couleur d'un éclairage artificiel éclairant dans une pièce où est placé un miroir influe sur la couleur en réflexion que procure ledit miroir. Aussi, peut-il être souhaitable de modifier le rendu de l'image en réflexion en jouant sur la couleur du miroir qui, combinée avec la couleur de l'éclairage artificiel, donnera un autre rendu de couleur.

On connaît au travers de documents de brevets, diverses solutions pour modifier la couleur de réflexion d'un miroir.

Les documents US3445216 et WO2004078664 enseignent un ajustement de la couleur en teintant dans la masse le verre constituant le substrat support du miroir.

Cependant, l'utilisation de verre coloré pose différents problèmes tels que par exemple des coûts élevés de fabrication, une faible disponibilité, une impossibilité de retrouver des tains très anciens comme par exemple celui lié à l'utilisation du mercure (galerie des glaces à Versailles).

Il est également connu d'insérer entre le substrat du miroir et la couche réfléchissante, une ou plusieurs couches d'interface.

Le brevet GB652858 propose un miroir coloré grâce à l'utilisation d'un empilement de différentes couches minces du type métal ou oxyde ou fluorure, entre le substrat transparent du miroir et la couche réfléchissante.

La demande de brevet WO2013054045 divulgue une autre solution en tant que couche d'interface. Il s'agit de l'association d'une matrice organique ou inorganique ou hybride, et d'un colorant organique inséré dans la matrice à l'état moléculaire.

L'invention a pour but de proposer encore une autre façon de fabriquer un miroir coloré durable, et de fournir un miroir pour lequel on peut imposer précisément la couleur de l'image réfléchie en adaptant la plage de longueurs d'onde qui sont aptes à être absorbées par le miroir.

Sous le terme de « durable », on entend un miroir qui résiste à la corrosion dans des conditions réelles de sollicitations chimiques. La durabilité des miroirs est notamment évaluée en réalisant des tests CASS (Copper Accelerated Salt Spray) consistant à soumettre le miroir à des essais accélérés au brouillard salin cupro acétique avec l'ajout de chlorure de cuivre (II), selon la norme EN ISO 9227.

L'invention porte sur un miroir coloré tel que défini dans la revendication 1, sur le procédé de fabrication de la revendication 12 et sur l'utilisation d'un substrat telle que définie dans la revendication 15.

Le miroir coloré selon la présente invention est de préférence utilisé en tant que miroir d'intérieur. Il présente avantageusement une bonne résistance à la corrosion.

On entend par « couche discontinue métallique», une couche comportant un revêtement métallique qui ne revêt pas toute (100%) la surface sur laquelle il est déposé. Le taux d'occupation surfacique de cette couche est strictement inférieur à 100%. Ce revêtement métallique se présente sous la forme d'îlots ou amas répartis uniformément ou non sur la totalité de la surface du substrat. Ces îlots sont séparés par des volumes d'absence complète de matière métallique. Ils peuvent éventuellement être connectés entre eux. Lorsqu'il est fait référence à l'épaisseur de cette couche discontinue métallique, on parle dans la présente invention d'épaisseur « nominale ». Il ne s'agit pas de l'épaisseur mesurée dans les zones couvertes par la couche discontinue métallique ou d'une épaisseur moyenne, mais de l'épaisseur qui serait obtenue si la couche métallique était continue. La couche métallique discontinue est par conséquent d'une épaisseur nominale inférieure à l'épaisseur minimum requise pour avoir une couche complète continue.

Au sens de la présente invention, on comprend sous les termes « couche à base d'un matériau » que la couche est constituée majoritairement de ce matériau, c'est-à-dire que l'élément chimique du matériau ou le produit du matériau considéré dans sa formule stœchiométrique stable constitue au moins 50% en pourcentage atomique de la couche considérée.

Dans la suite du texte, lorsqu'on parle d'image réfléchie ou d'image en réflexion, on veut parler de l'image réfléchie par le miroir d'un sujet animé ou inanimé.

La surcouche diélectrique recouvre la couche discontinue métallique et remplit les espaces séparant les îlots métalliques de ladite couche discontinue de sorte que les îlots métalliques de la couche ne soient pas en contact avec la couche métallique supérieure de réflexion du miroir.

On entend au sens de l'invention « couche de matériau diélectrique », une couche dont le matériau n'est pas un métal.

La couche d'interface (composée de la couche discontinue métallique, d'au moins une surcouche de diélectrique et éventuellement d'une ou plusieurs sous-couches) est suffisamment transparente pour qu'une partie de la lumière dans le domaine du visible la traverse afin d'atteindre la couche réfléchissante, soit réfléchie par cette couche réfléchissante et la traverse de nouveau en sens inverse.

Les inventeurs ont mis en évidence de manière surprenante qu'en fournissant une couche d'interface entre la couche métallique de réflexion du miroir et le substrat, cette couche d'interface comprenant d'une part une couche métallique répartie de manière discontinue, et d'autre part au moins un matériau diélectrique qui sépare le métal de la couche d'interface et celui de la couche métallique de réflexion, on parvenait à changer la couleur d'une image produite en réflexion par le miroir et à obtenir un miroir résistant à la corrosion.

Selon une caractéristique, l'épaisseur nominale de la couche discontinue métallique, son matériau, l'épaisseur de la surcouche diélectrique et son matériau sont tels qu'ils participent à la définition (constitution) de la couleur de réflexion du miroir. De manière non évidente, les inventeurs ont mis en évidence que non seulement la couche discontinue métallique avait une importance dans la couleur de réflexion du miroir, mais également la surcouche de diélectrique.

Ainsi, la couche d'interface modifie le spectre d'absorption du miroir. En contrôlant l'épaisseur nominale de la couche discontinue métallique, son matériau, l'épaisseur de la surcouche diélectrique et son matériau, on adapte la plage des longueurs d'onde qui sont absorbées par la couche d'interface pour au final adapter la couleur en réflexion du miroir.

Selon une autre caractéristique, la couche d'interface comporte au moins une sous-couche (une ou plusieurs sous-couches) disposée sous la couche discontinue métallique. La sous-couche est avantageusement à base d'un matériau fait de nitrures ou d'oxydes métalliques. Selon le type de matériau et l'épaisseur de la sous-couche de diélectrique combinés à l'épaisseur nominale et au matériau de la couche discontinue, et à l'épaisseur et au matériau de la surcouche diélectrique, cette sous-couche diélectrique participe également à la définition (constitution) de la couleur de réflexion du miroir, car elle modifie le spectre d'absorption de la couche totale d'interface.

Ainsi, l'épaisseur nominale de la couche discontinue métallique, son matériau, l'épaisseur de la surcouche diélectrique et son matériau, l'épaisseur et le matériau de la sous-couche diélectrique lorsqu'elle est présente, sont ainsi sélectionnés de manière appropriée pour définir la couleur du miroir.

La couche d'interface selon l'invention peut être la seule couche disposée entre le substrat et la couche réfléchissante. Cependant, pour ajuster encore la couleur en réflexion, trouver la couleur appropriée, le miroir selon l'invention peut comprendre plusieurs couches d'interface disposées entre le substrat et la couche métallique de réflexion.

La couche discontinue est métallique, le métal étant choisi parmi, seul ou en combinaison, l'argent, l'or, le cuivre, l'aluminium, le nickel et le palladium. De préférence, la surcouche de diélectrique déposée sur la couche discontinue et/ou la sous-couche diélectrique déposée sous la couche discontinue métallique sont à base d'oxyde ou nitrure de métaux tels que Mg, Al, Si, Ti, Cr, Zn, Zr, Nb, Ni, Mo, In, Sb, Sn, Ta, W ou Bi ou les alliages de ces métaux. On citera par exemple, des couches à base de nitrure de silicium Si₃N₄ éventuellement sur-ou sous- nitruré, d'oxyde de niobium éventuellement sur- ou sous-oxydé noté Nb₂Oₓ, d'oxyde de titane éventuellement sur- ou sous-oxydé noté TiOₓ, d'oxyde mixte d'étain et de zinc éventuellement sur- ou sous-oxydé SnZnOₓ, d'oxyde de zinc dopé à l'aluminium noté AZO, d'oxyde d'étain et d'indium noté ITO ou d'oxyde de silicium éventuellement sur- ou sous-oxydé noté SiOₓ

Avantageusement, la surcouche de diélectrique et/ou la sous-couche diélectrique présentent une épaisseur d'au plus 200 nm, en particulier comprise entre 1 et 200 nm, de préférence entre 5 et 50 nm.

De façon préférée, pour obtenir un miroir résistant à la corrosion, la sous-couche de diélectrique est préférentiellement choisie parmi le nitrure de silicium Si₃N₄ éventuellement sur-ou sous- nitruré, l'oxyde de niobium éventuellement sur- ou sous-oxydé noté Nb₂Oₓ, l'oxyde de titane éventuellement sur- ou sous-oxydé noté TiOₓ, l'oxyde mixte d'étain et de zinc éventuellement sur- ou sous-oxydé SnZnOₓ,, l'oxyde d'étain et d'indium noté ITO ou l'oxyde de silicium éventuellement sur- ou sous-oxydé noté SiOₓ.

La surcouche diélectrique est quant à elle choisie parmi l'oxyde de niobium éventuellement sur- ou sous- oxydé noté Nb₂Oₓ ou l'oxyde de titane éventuellement sur- ou sous- oxydé noté TiOₓ. Encore plus préférentiellement, la surcouche diélectrique est en oxyde de titane éventuellement sur- ou sous-oxydé noté TiOₓ.

Le substrat transparent peut être une feuille en verre, minéral ou organique, dont l'épaisseur varie entre 2 et 8 mm. si le verre est organique, il peut être en polycarbonate, en polyméthacrylate de m éthyle, en polyéthylène téréphtalate ou en poly(éthylène-co-tétrafluoroéthylène). Le substrat peut également être un film en matière plastique.

La couche réfléchissante métallique permettant la fonction de miroir peut être en argent ou en aluminium. Elle peut être déposée en phase vapeur, par exemple par CVD, PVD, magnétron, évaporation ou par voie liquide selon le type de matériau. Elle présente généralement une épaisseur comprise entre 20 nm et 200 nm, de préférence entre 50 et 150 nm.

Dans un exemple préféré de l'invention, le miroir coloré est tel que le substrat est en verre de préférence d'épaisseur entre 2 et 4 mm, la couche métallique de réflexion est en argent, de préférence d'épaisseur comprise entre 50 et 100 nm, la couche discontinue métallique est en argent, de préférence d'épaisseur nominale comprise entre 0,1 et 1,5 nm, et la surcouche de diélectrique présente une épaisseur comprise entre 1 et 10 nm, et de préférence est, Si₃N₄, ITO, SnZnOₓ, Nb₂Oₓ ou TiOₓ. Un tel miroir conduit à une couleur en réflexion rose ou tendant vers le rose, donnant en particulier un effet « bonne mine » lorsqu'une personne se regarde dans le miroir.

Dans un autre exemple plus préféré, le miroir coloré est tel que le substrat est en verre de préférence d'épaisseur entre 2 et 4 mm, la couche métallique de réflexion est en argent, de préférence d'épaisseur comprise entre 50 et 100 nm, la couche discontinue métallique est en argent, de préférence d'épaisseur nominale comprise entre 0,1 et 1,5 nm, et la surcouche de diélectrique présente une épaisseur comprise entre 1 et 10 nm, et est en Nb₂Oₓ ou TiOₓ.

Dans un autre exemple encore plus préféré, le miroir coloré est tel que le substrat est en verre de préférence d'épaisseur entre 2 et 4 mm, la couche métallique de réflexion est en argent, de préférence d'épaisseur comprise entre 50 et 100 nm, la couche discontinue métallique est en argent, de préférence d'épaisseur nominale comprise entre 0,1 et 1,5 nm, et la surcouche de diélectrique présente une épaisseur comprise entre 1 et 10 nm, et est TiOₓ. Un tel miroir présente la coloration souhaitée et une très bonne résistance à la corrosion.

Selon encore une autre caractéristique, une couche d'accroche, peut être déposée sur la couche d'interface et constitue une couche fonctionnelle pour faciliter l'adhésion de la couche métallique de réflexion du miroir. Cette couche d'accroche est par exemple en titane ou en alliage nickel-chrome NiCr, éventuellement sur- ou sous-oxydés (TiOx ou NiCrOx) quand la couche de réflexion métallique est déposée en phase vapeur.

Lorsque le dépôt de la couche de réflexion métallique est effectué par voie liquide, de façon classique dans les procédés d'argenture, des couches d'accroche à base de chlorure d'étain et de palladium sont déposées sur la couche d'interface, et constituent des couches fonctionnelles pour faciliter l'adhésion de la couche métallique de réflexion du miroir.

Avantageusement, il s'avère que la couche d'accroche ne fait pas ou peu varier la couleur de réflexion rendue via la couche d'interface.

Une couche fonctionnelle de protection peut être disposée sur la couche métallique de réflexion du miroir, et est à base d'oxyde ou de nitrure de métaux tels que Mg, Al, Si, Ti, Cr, Zn, Zr, Nb, Ni, Mo, In, Sb, Sn, Ta, W ou Bi ou les alliages de ces métaux. On citera par exemple le Si₃N₄, Nb₂Oₓ, TiOₓ, SnZnOₓ, ou-, SiOₓ. Préférentiellement, cette couche fonctionnelle de protection est présente lorsque la couche réfléchissante continue a été déposée par magnétron.

De manière usuelle, un revêtement de protection du type peinture est de préférence déposé sur la couche métallique de réflexion, voire sur sa couche de protection éventuelle. Ce revêtement est généralement du type alkyde, polyuréthane ou acrylique.

L'invention a également trait à un procédé de fabrication d'un miroir coloré comportant une étape de dépôt d'au moins une couche d'interface sur un substrat, une étape de dépôt d'une couche métallique de réflexion sur le substrat revêtu, éventuellement le dépôt d'une couche de protection sur la couche métallique de réflexion, caractérisé en ce que le dépôt de la couche d'interface comporte une étape de dépôt sur le substrat d'une couche discontinue métallique, une étape de dépôt d'au moins une surcouche sur la couche discontinue formant une couche de diélectrique entre la couche discontinue métallique et la couche métallique de réflexion, de préférence la surcouche étant un oxyde ou un nitrure métallique, et éventuellement une étape de dépôt d'une ou plusieurs sous-couches diélectriques de préférence d'oxyde ou nitrure métallique agencées sur le substrat et préalablement au dépôt de la couche discontinue métallique.

Ce procédé diffère des procédés de préparation classiques des miroirs en argent en ce qu'il ne comprend pas d'étape d'avivage de la surface sur laquelle est déposée la couche métallique de réflexion. Pour les miroirs classiques, cette étape est habituellement réalisée sur le substrat en verre avant les étapes de sensibilisation et d'activation qui précédent le dépôt de la couche d'argent, dans le but d'améliorer leur durabilité.

Selon une caractéristique, l'étape de dépôt de la couche d'interface consiste, en fonction de la couleur souhaitée en réflexion du miroir, à sélectionner le matériau, et adapter l'épaisseur nominale de la couche discontinue métallique, et à sélectionner et adapter le matériau et l'épaisseur de la surcouche diélectrique, ainsi qu'à sélectionner et adapter le matériau et l'épaisseur de la sous-couche diélectrique lorsqu'elle est présente.

Le dépôt de la couche discontinue métallique est de préférence réalisé par pulvérisation magnétron. Pour faire varier l'épaisseur nominale de ladite couche discontinue, on fait varier la puissance appliquée à la cible tandis que le substrat est fixe sous la cible pour une même durée de dépôt, ou bien on fait varier la vitesse de défilement du substrat sous la cible en gardant fixe la puissance. Il est également possible de faire varier la puissance en maintenant la même vitesse de défilement du substrat sous la cible.

La valeur de l'épaisseur nominale pour une puissance donnée est donc accessible en considérant la vitesse de défilement du substrat dans l'enceinte de dépôt de la couche et la quantité de matière pulvérisée par unité de temps à cette puissance. Le couple puissance/vitesse de défilement permet notamment d'ajuster l'épaisseur nominale de la couche discontinue. A titre d'exemple, si habituellement, dans des conditions de dépôt par pulvérisation magnétron données (très faible pression, composition de la cible, puissance électrique appliquée à la cathode) l'épaisseur de la couche est de 10 nm, on augmentera la vitesse de défilement du substrat d'un facteur 2 pour obtenir une épaisseur de couche de moitié, c'est-à-dire de 5 nm.

Le dépôt de la surcouche diélectrique ou de la sous-couche diélectrique qui est à base d'oxyde ou de nitrure métallique, est de préférence réalisé par pulvérisation magnétron.

De plus, les inventeurs ont montré de manière non évidente qu'en adaptant le taux d'oxygène lors du dépôt par pulvérisation magnétron de la surcouche et/ou la sous-couche diélectrique de la couche d'interface lorsque celles-ci sont à base d'un oxyde métallique et sont en contact direct avec la couche discontinue métallique, cela conduit à ajuster la nuance de couleur du miroir.

Le dépôt de la couche métallique de réflexion est réalisé de manière connue par phase vapeur (CVD, PVD, magnétron, évaporation) ou voie liquide. De façon préférée, le dépôt de la couche métallique de réflexion est effectué par voie liquide.

Lorsque le substrat est en verre, celui-ci a pu subir un traitement de trempe ou une texturation avant le dépôt de la couche d'interface.

Enfin, l'invention est relative à l'utilisation d'un substrat transparent comprenant une couche métallique de réflexion pour la fonction miroir, et au moins une couche d'interface entre le substrat et la couche métallique pour fournir un miroir coloré, caractérisée en ce que la couche d'interface comporte au moins une couche discontinue métallique, et au moins une surcouche d'un matériau diélectrique déposée sur la couche discontinue, et éventuellement au moins une sous-couche d'un matériau diélectrique déposée sous la couche discontinue, et en ce que l'on choisit la couleur du miroir en sélectionnant la nature et l'épaisseur nominale de la couche discontinue et la nature et les épaisseurs des surcouche(s) et sous-couche(s) diélectrique.

A titre d'exemples nullement limitatifs de fonctionnalité d'un tel miroir pour visualiser une image en réflexion, citons un miroir pour lequel on souhaite une couleur appropriée de l'image en réflexion, telle qu'une couleur rose donnant un effet « bonne mine » à la personne se regardant dans le miroir, ou bien un miroir qui compense/atténue la couleur d'un éclairage artificiel.

La présente invention est maintenant décrite à l'aide d'exemples uniquement illustratifs et nullement limitatifs de la portée de l'invention, et à partir des illustrations ci-jointes, dans lesquelles :
- La figure 1a représente une vue schématique en coupe d'un miroir selon l'invention;
- La figure 1b représente une variante de la figure 1 ;
- La figure 2 montre l'absorption de la lumière visible en fonction de la longueur d'onde pour plusieurs échantillons, illustrant le rôle joué par la nature du matériau de la surcouche de diélectrique au regard de la couleur en réflexion du miroir ;
- La figure 3 montre l'absorption de la lumière visible en fonction de la longueur d'onde pour plusieurs échantillons, illustrant le rôle joué par la nature du matériau de la sous-couche diélectrique au regard de la couleur en réflexion du miroir ;
- La figure 4 montre l'absorption de la lumière en fonction de la longueur d'onde pour plusieurs échantillons, illustrant le rôle joué par l'épaisseur nominale du matériau de la couche discontinue au regard de la couleur en réflexion du miroir.

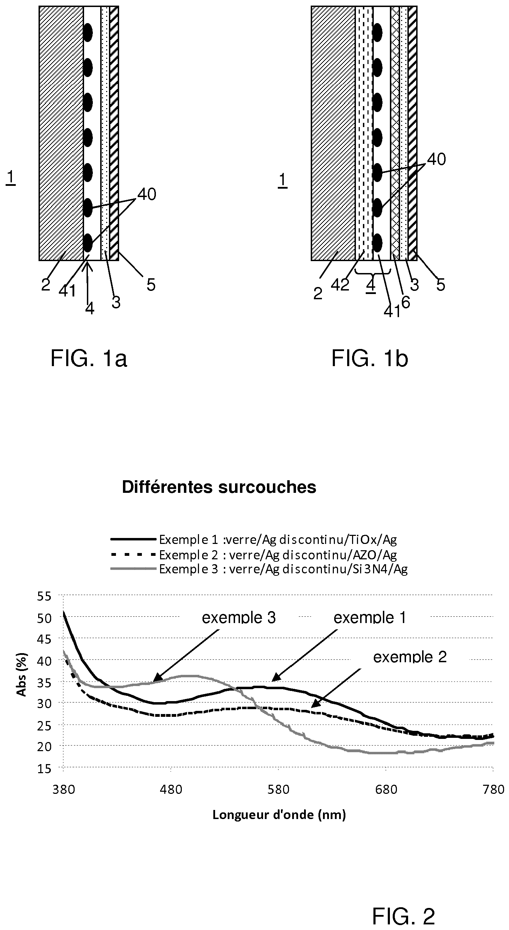

Les figures 1 et 2 ne sont pas à l'échelle pour en faciliter la lecture.

Le miroir coloré 1 de l'invention comporte un substrat transparent 2 tel qu'un substrat verrier, une couche métallique réfléchissante 3 telle qu'en argent, une couche d'interface 4 décrite ci-après et disposée entre le substrat 2 et la couche métallique réfléchissante 3, et une couche de peinture 5 tel que de l'acrylique recouvrant la couche métallique de réflexion 3.

Dans la variante de la figure 2, le miroir coloré comporte une couche d'accroche 6 déposée sur la couche d'interface 4 pour faciliter l'adhésion de la couche d'argent réfléchissante 3. Cette couche d'accroche est par exemple en NiCr. Selon l'invention, la couche d'interface 4 comporte au moins une couche discontinue 40 métallique et au moins une surcouche 41 composée d'un matériau diélectrique, recouvrant la couche discontinue métallique de sorte à éviter tout contact entre la couche discontinue 40 et la couche métallique réfléchissante 3.

Dans la variante de la figure 2, la couche d'interface 4 comporte une couche complémentaire 42 qui est une sous-couche diélectrique déposée sous la couche discontinue métallique 41.

La couche d'interface 4 a pour rôle de modifier le spectre d'absorption dans le visible du miroir de sorte à produire une image en réflexion dont la couleur est modifiée, c'est-à-dire différente de la couleur produite en l'absence d'une telle couche d'interface.

Les surcouche et sous-couche diélectrique 41 et 42 ont un rôle sur les propriétés optiques et permettent également de protéger la couche métallique discontinue.

Les inventeurs ont mis en évidence de manière surprenante que :
- une couche d'interface, transparente afin que la lumière atteigne la couche réfléchissante 3, permet de modifier le spectre d'absorption dans le visible et ainsi la couleur de l'image en réflexion dans le miroir ;
- la couche discontinue métallique 40 de la couche d'interface participe à la modification de la couleur du miroir ;
- la surcouche de diélectrique 41 nécessaire pour isoler la couche métallique réfléchissante 3 de la couche discontinue 40 métallique, permet également de jouer sur la couleur de l'image en réflexion ;
- la sous-couche diélectrique 42 permet aussi s'il est besoin d'ajuster encore la couleur,
- les miroirs selon l'invention ont une durabilité améliorée.

Le matériau et l'épaisseur nominale de la couche discontinue métallique 40, la nature et l'épaisseur de la surcouche de diélectrique 41, et de la sous-couche diélectrique 42 sont adaptés en fonction de la couleur souhaitée en réflexion.

Le miroir de l'invention peut comprendre plusieurs empilements de couches d'interface, chaque couche d'interface comprenant une ou plusieurs sous-couches diélectriques, une couche discontinue métallique et une ou plusieurs surcouches diélectriques, pour ajuster la couleur et la nuance souhaitées.

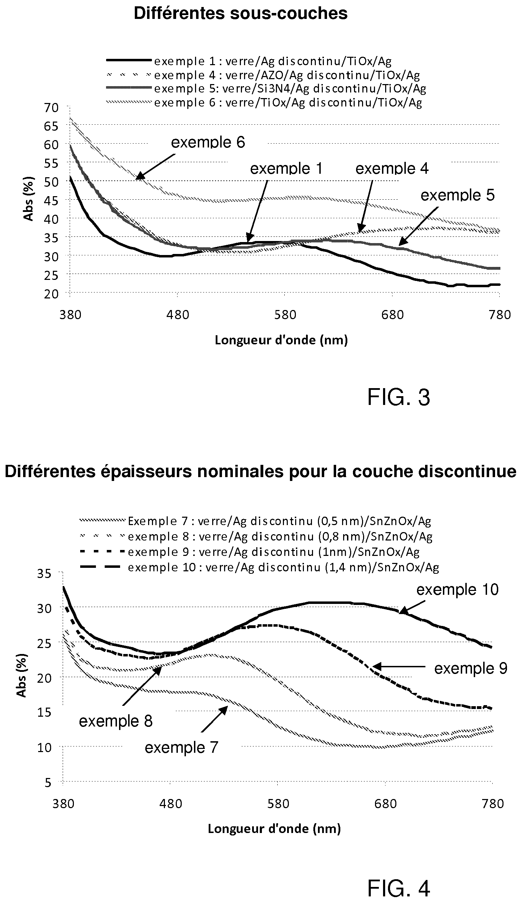

Les courbes décrites ci-après au regard des figures 3 et suivantes montrent comment il est possible en jouant sur les types de matériau et les épaisseurs de modifier les longueurs d'onde absorbées et la quantité de lumière absorbée pour fournir une couleur adaptée en réflexion.

La couche discontinue 40 métallique est composée uniquement de métal choisi parmi de préférence les métaux suivants, seuls ou en combinaison, argent, or, cuivre, aluminium, nickel, palladium. Elle possède une épaisseur nominale n'excédant pas 15 nm afin de rester discontinue, c'est-à-dire sans qu'elle ne puisse recouvrir entièrement (100 %) la surface sur laquelle elle est déposée. Selon l'invention cette épaisseur se situe entre 0,1 nm et 8 nm.

La surcouche de diélectrique 41 est composée d'un oxyde ou d'un nitrure métallique, de préférence choisi parmi Si₃N₄, Nb₂Oₓ, TiOₓ, SnZnOₓ, AZO, ITO et SiOₓ. Plus préférentiellement, elle est choisie parmi Si₃N₄, Nb₂Oₓ, TiOₓ, SnZnOₓ, ITO, SiOₓ. Encore plus préférentiellement, la surcouche de diélectrique 41 est en TiOₓ.

Des tests comparatifs à titre d'exemples nullement limitatifs ont été faits en faisant varier la nature de la surcouche (figure 2), la nature de la sous-couche diélectrique (figure 3) et l'épaisseur nominale de la couche discontinue métallique (figure 4). Le tableau ci-après résume pour chaque exemple, la nature et l'épaisseur des sous-couches et surcouches diélectriques ainsi que l'épaisseur nominale de la couche discontinue en argent constituant la couche d'interface, l'épaisseur de la couche de réflexion du miroir en argent et l'épaisseur du substrat.

| Exemples | Sous-couche (nature et épaisseur) | Epaisseur de la couche discontinue en Ag | Surcouche (nature et épaisseur) | Epaisseur de la couche de réflexion en Ag | Epaiss eur du substra t verre |
|---|---|---|---|---|---|
| Exemple 1 | - | 1 nm | TiOx : 5 nm | 70 nm | 4 mm |
| Exemple 2 | - | 1 nm | AZO : 5 nm | 70 nm | 4 mm |
| Exemple 3 | - | 1 nm | Si₃N₄ : 5 nm | 70 nm | 4 mm |
| Exemple 4 | AZO : 5 nm | 1 nm | TiOx : 5 nm | 70 nm | 4 mm |
| Exemple 5 | Si₃N₄ : 5 nm | 1 nm | TiOx : 5 nm | 70 nm | 4 mm |
| Exemple 6 | TiOx : 5 nm | 1 nm | TiOx : 5 nm | 70 nm | 4 mm |
| Exemple 7 | - | 0,5 nm | SnZnOₓ : 5 nm | 100 nm | 2 mm |
| Exemple 8 | - | 0,8 nm | SnZnOₓ : 5 nm | 100 nm | 2 mm |
| Exemple 9 | - | 1 nm | SnZnOₓ : 5 nm | 100 nm | 2 mm |
| Exemple 10 | - | 1,4 nm | SnZnOₓ : 5 nm | 100 nm | 2 mm |

Dans tous les exemples 1 à 10 :
- le substrat est en verre, commercialisé sous le nom PLANILUX par la société SAINT-GOBAIN GLASS FRANCE ;
- la couche métallique réfléchissante 3 est en argent déposée par pulvérisation magnétron ;
- aucun revêtement de protection n'a été ajouté à la couche réfléchissante 3;
- la couche discontinue métallique 40, est en argent et déposée par la technique de pulvérisation magnétron ;
- les sous-couches et surcouches ont été déposées par pulvérisation magnétron.

Les conditions de dépôt par voie magnétron des différentes couches de la couche d'interface sont données ci-dessous :

| Couche | Cible employée | Pression de dépôt (en10 mbar) | Puissance de dépôt (en W) | Gaz | Quantité de gaz (en cm³/min ou sccm) |
|---|---|---|---|---|---|
| Couche discontinue Ag de 0,5 nm | Ag | 8 | 50 | Ar | 150 |
| Couche discontinue Ag de 0,8 nm | Ag | 8 | 70 | Ar | 150 |
| Couche discontinue Ag de 1 nm | Ag | 8 | 100 | Ar | 150 |
| Couche discontinue Ag de 1,4 nm | Ag | 8 | 150 | Ar | 150 |
| TiOx | TiO₂ | 2 | 2000 | Ar | 40 |
| AZO | ZnO : Al 2% en poids | 2 | 1300 | Ar | 40 |
| Surcouche Si₃N₄ | Si : Al 8% en poids | 1,5 | 2300 | Ar+N₂ | 19 (Ar) 23 (N₂) |
| SnZnOₓ | SnZnO à 50:50 % en poids | 2 | 1000 | Ar + O₂ | 40 (Ar) 5 (O₂₎ |

Les figures 2 à 4 permettent de démontrer l'influence de la nature des matériaux et épaisseurs et/ou épaisseurs nominales de chacune des couches de la couche d'interface au regard des longueurs d'onde absorbées afin de modifier la couleur d'une image en réflexion par le miroir.

La figure 2 montre le rôle joué par la nature du matériau de la surcouche de diélectrique 41 dans la couleur en réflexion du miroir. Il s'agit des exemples 1 à 3 du tableau.

Pour ces courbes d'absorption des exemples 1 à 3 de miroirs, seule la surcouche de diélectrique 41 de la couche d'interface 4 diffère, le miroir comprenant le verre, la couche discontinue 40 en argent d'épaisseur nominale 1 nm (sans sous-couche diélectrique), la surcouche de diélectrique 41 et la couche réfléchissante 3 en argent de 70 nm. Les différentes surcouches de diélectrique sont respectivement, TiOx (Exemple 1), AZO (Exemple 2), et Si₃N₄ (Exemple 3), d'une épaisseur chacune de 5 nm.

On constate que le spectre d'absorption est différent pour chacun des exemples, engendrant une couleur de l'image en réflexion par le miroir différente.

Des mesures dans le système L*a*b* ont été faites pour caractériser la couleur du miroir de chaque exemple. Toutes les mesures dans les différents tableaux qui suivent ont été faites sous illuminant D65 et avec un angle d'observation de 10°.

| Exemple | L* | a* | b* |
|---|---|---|---|
| Exemple 1 (TiOₓ) | 85,9 | 0,6 | -0,9 |
| Exemple 2 (AZO) | 87,9 | 0,3 | -0,1 |
| Exemple 3 (Si₃N₄) | 87,1 | 6,7 | 3,9 |

Cela confirme que chaque exemple correspond bien à une couleur particulière. Les exemples 1 et 2 sont néanmoins très proches et décrivent des miroirs ayant une couleur relativement neutre. Par contre, l'exemple 3 avec Si₃N₄ conduit à une couleur distincte, la couleur pouvant être qualifiée de « pêche ».

La figure 3 montre que l'ajout d'une sous-couche diélectrique 42 joue également un rôle dans la couleur en réflexion du miroir.

La figure 3 illustre quatre courbes pour quatre miroirs comprenant la couche réfléchissante 3 en argent de 70 nm, et la couche d'interface 4 qui comprend une couche discontinue 40 en argent de 1 nm, une surcouche de diélectrique 41 de 5 nm en TiOx et selon les exemples respectifs : aucune sous-couche (exemple 1 de la figure 2), une sous-couche en AZO d'une épaisseur de 5 nm (exemple 4), une sous-couche en Si₃N₄ d'une épaisseur de 5 nm (exemple 5) et une sous-couche en TiOx d'une épaisseur de 5 nm (exemple 6).

On constate qu'en ajoutant une sous-couche diélectrique (exemples 4, 5 et 6) au regard de l'exemple 1 sans sous-couche diélectrique, les couleurs varient, les courbes de la figure 3 étant décalées et les valeurs d'absorption étant différentes.

On a en outre fait les mesures suivantes :

| Exemple | L* | a* | b* |
|---|---|---|---|
| Exemple 1 (sans sous-couche) | 85,9 | 0,6 | -0,9 |
| Exemple 4 (sous-couche AZO) | 85,9 | -3,9 | 4,4 |
| Exemple 5 (sous-couche Si₃N₄) | 85,6 | -2,7 | 3,2 |
| Exemple 6 (sous-couche TiOₓ) | 78,9 | -2,3 | 4,8 |

Lorsque l'on n'a pas de sous-couche diélectrique (exemple 1), la couleur est neutre comme déjà vu.

Or, on constate qu'en ajoutant une sous-couche diélectrique, la couleur change totalement, les valeurs L*a*b* étant toutes différentes. De la couleur neutre de l'exemple 1, on passe à une couleur qui tend vers le jaune pour les exemples 4, 5 et 6. Selon la nature du matériau de la sous-couche diélectrique, le jaune sera nuancé.

La figure 4 montre le rôle joué par l'épaisseur nominale de la couche discontinue métallique 40. Cette figure illustre quatre exemples pour lesquels la couche d'interface n'a pas de sous-couche diélectrique et présente une surcouche de SnZnOx d'une épaisseur de 5 nm, et une couche discontinue en Ag dont l'épaisseur nominale varie, avec respectivement 0,5 nm (exemple 7), 0,8 nm (exemple 8), 1 nm (exemple 9) et 1,4 nm (exemple 10).

On constate là encore que chaque courbe d'absorption présente un pic d'absorption décalé en longueur d'onde, et une quantité d'absorption distincte, changeant au final la couleur de réflexion du miroir.

Les couleurs dans le système L*a*b* sont les suivantes :

| Exemple | L* | a* | b* |
|---|---|---|---|
| Exemple 7 (Ag de 0,5 nm) | 93,9 | 2,2 | 2,5 |
| Exemple 8 (Ag de 0,8 nm) | 91,4 | 3,5 | 0,5 |
| Exemple 9 (Ag de 1 nm) | 88,9 | 0,7 | -2,4 |
| Exemple 10 (Ag de 1,4 nm) | 88,2 | -2,0 | -2,9 |

On constate que l'épaisseur nominale de la couche discontinue métallique joue un rôle incontestable dans la couleur du miroir.

L'exemple 7 fournit une couleur plutôt pêche. L'exemple 8 tend vers le rouge, tandis que l'exemple 9 est plutôt bleu et l'exemple 10 de couleur vert-bleu.

Ainsi, en augmentant l'épaisseur nominale de la couche discontinue en Ag, on modifie la couleur, voire la nuance.

Par conséquent, l'invention permet très avantageusement de fabriquer un miroir dont on peut imposer la couleur. La couche d'interface avec sa couche discontinue métallique permet incontestablement de fournir une couleur spécifique. La couleur souhaitée du miroir (comprenant la nuance de couleur) sera fournie en adaptant non seulement la nature et l'épaisseur nominale de la couche discontinue mais également en sélectionnant de manière idoine la nature et l'épaisseur de la surcouche de diélectrique, de la sous-couche diélectrique, et d'y associer si besoin plusieurs empilements de couches d'interface aux épaisseurs et natures de matériaux choisis.

Des tests de résistance à la corrosion ont été réalisés sur certains miroirs selon la présente invention.

Une première série de tests a été réalisée pour comparer la durabilité des miroirs après plusieurs cycles de CASS test.

On a ainsi comparé un miroir « classique » avec un miroir selon l'invention pendant 4 cycles consécutifs. Le miroir dit « classique » comprend un substrat en verre de 4 mm de type Planiclear, sur lequel une couche métallique de réflexion de 70 nm d'argent a été déposée par voie liquide puis a été recouverte d'une couche de peinture d'une épaisseur d'environ 50µm.

Le miroir selon l'invention (exemple 11) comprend un substrat en verre de type Planiclear de 4 mm sur lequel sont déposées une couche discontinue en argent d'une épaisseur nominale de 0,5 nm et une surcouche de TiOₓ d'une épaisseur de 5 nm déposées par magnétron, puis une couche métallique de réflexion de 70 nm en argent déposée par voie liquide et une couche de protection en peinture d'une épaisseur d'environ 50 µm. L'argenture et le dépôt de la couche de protection en peinture ont été effectués de la même façon pour les deux miroirs testés.

Les miroirs ainsi obtenus sont soumis à quatre cycles de CASS test (120 h à 50°C, solution aqueuse de 50g/L de NaCl et 0.26g/L de CuCl₂ anhydre, le pH étant compris entre 3.1 et 3.3) et la largeur de corrosion sur les bords des miroirs est mesurée.

Le tableau ci-dessous donne les valeurs des largeurs de corrosion en microns mesurées sur les bords pour chacun des deux miroirs :

| | Miroir « classique » comparatif (série 1) | Miroir selon l'invention exemple 11 |
|---|---|---|
| Cycle 1 | 287 µm | 100 µm |
| Cycle 2 | 537 µm | 137 µm |
| Cycle 3 | 837 µm | 225 µm |
| Cycle 4 | 862 µm | 362 µm |

Le miroir selon l'invention présente une meilleure durabilité que le miroir classique testé alors qu'aucune étape d'avivage de la surface sur laquelle est déposée la couche d'argent de réflexion n'a été réalisée.

Une deuxième série de tests (série 2) a été réalisée sur différents miroirs selon l'invention, en réalisant un cycle de CASS test. On a comparé les résultats obtenus avec un miroir de référence, non conforme à l'invention, préparé dans les mêmes conditions que les miroirs selon l'invention pour le dépôt de la couche métallique de réflexion en argent et la couche protectrice de peinture. -exemple 12 : un substrat en verre de 4 mm de type Planiclear est recouvert d'une sous-couche de TiOₓ d'une épaisseur de 5 nm, d'une couche discontinue en argent d'une épaisseur nominale de 0.5 nm puis d'une surcouche de TiOₓ d'une épaisseur de 5 nm, l'ensemble de ces couches étant déposées par magnétron. Une couche métallique de réflexion en argent d'une épaisseur de 70 nm est ensuite déposée par voie liquide et est recouverte d'une couche protectrice en peinture de 50 µm.

-exemple 13 : un substrat en verre de 4 mm de type Planiclear est recouvert d'une sous-couche de SiOₓ d'une épaisseur de 5 nm, d'une couche discontinue en argent d'une épaisseur nominale de 0.5 nm puis d'une surcouche de TiOₓ d'une épaisseur de 5 nm, l'ensemble de ces couches étant déposées par magnétron. Une couche métallique de réflexion en argent d'une épaisseur de 70 nm est ensuite déposée par voie liquide et est recouverte d'une couche protectrice en peinture de 50 µm.

Le miroir de référence comparatif (série 2) est un substrat en verre de type Planiclear sur lequel a été déposée une couche métallique de réflexion en argent d'une épaisseur de 70 nm par voie liquide puis recouverte d'une couche de peinture protectrice de 50 µm.

Le tableau ci-dessous donne les valeurs des largeurs de corrosion en microns mesurées sur les bords pour chacun des 3 miroirs après un cycle de CASS test.

| | Largeur de corrosion aux bords (µm) |
|---|---|
| Exemple 12 | 181 |
| Exemple 13 | 175 |
| Miroir comparatif série 2 | 562 |

Ces exemples montrent que les miroirs selon l'invention ont une durabilité améliorée par rapport au miroir de référence alors qu'aucune étape d'avivage de la surface sur laquelle est déposée la couche d'argent de réflexion n'a été réalisée.

## Revendications

1. Miroir coloré (1) dans lequel un utilisateur est susceptible de se mirer, présentant une réflectivité lumineuse d'au moins 50% dans le domaine du visible, ledit miroir comportant un substrat transparent (2), une couche métallique réfléchissante (3) et au moins une couche d'interface (4) entre le substrat et la couche métallique, **caractérisé en ce que** la couche d'interface (4) comporte au moins une couche discontinue (40) métallique, dite couche discontinue, et au moins une couche d'un matériau diélectrique (41) déposée sur la couche discontinue, dite surcouche, et **en ce que** la couche discontinue métallique (40) présente une épaisseur nominale comprise entre 0,1 et 8 nm.

2. Miroir selon la revendication 1, **caractérisé en ce que** la couche d'interface (4) comporte au moins une sous-couche diélectrique (42) disposée sous la couche discontinue métallique (40) et **en ce que** cette sous-couche (42) est à base d'un matériau fait de nitrures ou d'oxydes métalliques.

3. Miroir selon la revendication 1 ou 2, **caractérisé en ce que** l'épaisseur nominale de la couche discontinue métallique (40), son matériau, l'épaisseur de la couche diélectrique (41) et son matériau, l'épaisseur et le matériau de la sous-couche diélectrique (42) lorsqu'elle est présente, sont tels qu'ils définissent la couleur de réflexion du miroir.

4. Miroir selon l'une quelconque des revendications précédentes, **caractérisé en ce que** le métal de la couche discontinue (40) est choisi parmi, seul ou en combinaison, l'argent, l'or, le cuivre, l'aluminium, le nickel et le palladium.

5. Miroir selon l'une quelconque des revendications précédentes, **caractérisé en ce que** la surcouche de diélectrique (41) déposée sur la couche discontinue métallique et/ou la sous-couche diélectrique (42) déposée sous la couche discontinue, lorsque cette sous-couche est présente, sont à base d'oxyde ou nitrure de métaux tels que Mg, Al, Si, Ti, Cr, Zn, Zr, Nb, Ni, Mo, In, Sb, Sn, Ta, W ou Bi ou les alliages de ces métaux, notamment à base de nitrure de silicium Si₃N₄ éventuellement sur-ou sous- nitruré, d'oxyde de niobium éventuellement sur- ou sous- oxydé noté Nb₂Oₓ, d'oxyde de titane éventuellement sur- ou sous- oxydé noté TiOₓ, d'oxyde mixte d'étain et de zinc éventuellement sur- ou sous- oxydé SnZnOₓ, d'oxyde de zinc dopé à l'aluminium noté AZO, d'oxyde d'étain et d'indium noté ITO ou d'oxyde de silicium éventuellement sur- ou sous-oxydé noté SiOₓ.

6. Miroir selon l'une quelconque des revendications précédentes, **caractérisé en ce que** la surcouche de diélectrique (41) déposée sur la couche discontinue métallique et/ou la sous-couche diélectrique déposée sous la couche discontinue, lorsque cette sous-couche est présente, présentent une épaisseur comprise entre 1 et 200 nm, de préférence entre 5 et 50 nm.

7. Miroir selon l'une des revendications 2 à 6, **caractérisé en ce que** la sous-couche diélectrique (42) est choisie parmi le nitrure de silicium Si₃N₄ éventuellement sur- ou sous- nitruré, l'oxyde de niobium éventuellement sur- ou sous- oxydé noté Nb₂Oₓ, l'oxyde de titane éventuellement sur- ou sous- oxydé noté TiOₓ, l'oxyde mixte d'étain et de zinc éventuellement sur-ou sous- oxydé SnZnOₓ, ou l'oxyde d'étain et indium noté ITO, l'oxyde de silicium éventuellement sur- ou sous- oxydé noté SiOₓ.

8. Miroir selon l'une des revendications précédentes **caractérisé en ce que** la surcouche diélectrique (41) est choisie parmi l'oxyde de niobium éventuellement sur- ou sous- oxydé noté Nb₂Oₓ ou l'oxyde de titane éventuellement sur- ou sous- oxydé noté TiO_{x.}

9. Miroir selon l'une quelconque des revendications précédentes, **caractérisé en ce qu'**il comporte une couche d'accroche déposée sur la couche d'interface pour faciliter l'adhésion de la couche métallique de réflexion du miroir.

10. Miroir selon l'une quelconque des revendications précédentes, **caractérisé en ce que** le substrat (2) est en verre de préférence d'épaisseur entre 2 et 4 mm, la couche métallique de réflexion (3) est en argent, de préférence d'épaisseur comprise entre 50 et 100 nm, la couche discontinue (40) est en argent, de préférence d'épaisseur nominale comprise entre 0,1 et 1,5 nm, et la surcouche de diélectrique (41) présente une épaisseur comprise entre 1 et 10 nm, et de préférence est en ITO, SnZnOₓ, Nb₂Oₓ ouTiOₓ.

11. Miroir selon l'une des revendications précédentes **caractérisé en ce que** le substrat (2) est en verre de préférence d'épaisseur entre 2 et 4 mm, la couche métallique de réflexion (3) est en argent, de préférence d'épaisseur comprise entre 50 et 100 nm, la couche discontinue (40) est en argent, de préférence d'épaisseur nominale comprise entre 0,1 et 1,5 nm, la surcouche de diélectrique (41) présente une épaisseur comprise entre 1 et 10 nm, et est en Nb₂Oₓ ou TiOₓ.

12. Procédé de fabrication d'un miroir coloré selon l'une des revendications précédentes, comportant une étape de dépôt d'au moins une couche d'interface sur un substrat, une étape de dépôt d'une couche métallique de réflexion sur le substrat revêtu, éventuellement le dépôt d'une couche de protection sur la couche métallique de réflexion, **caractérisé en ce que** le dépôt de la couche d'interface comporte une étape de dépôt sur le substrat d'une couche discontinue métallique, une étape de dépôt d'une surcouche sur la couche discontinue formant une couche de diélectrique entre la couche discontinue et la couche métallique de réflexion, de préférence la surcouche étant un oxyde ou un nitrure métallique, et éventuellement une étape de dépôt d'une ou plusieurs sous-couches de préférence d'oxyde ou de nitrure métallique agencées sur le substrat et préalablement au dépôt de la couche discontinue.

13. Procédé selon la revendication précédente, **caractérisé en ce que** l'étape de dépôt de la couche d'interface consiste, en fonction de la couleur souhaitée en réflexion du miroir, à sélectionner le matériau et adapter l'épaisseur nominale de la couche discontinue métallique, à sélectionner et adapter le matériau et l'épaisseur de la surcouche diélectrique, ainsi qu'à sélectionner et adapter le matériau et l'épaisseur de la sous-couche diélectrique lorsqu'elle est présente.

14. Procédé selon la revendication 12 ou 13, **caractérisé en ce que** la surcouche et/ou la sous-couche diélectrique de la couche d'interface sont déposées par pulvérisation magnétron et **en ce que** pour la surcouche et la sous-couche qui sont en contact direct avec la couche discontinue métallique et sont à base d'un oxyde métallique, l'on adapte le taux d'oxygène lors de leur dépôt afin de modifier la couleur en réflexion du miroir.

15. Utilisation d'un substrat transparent (2) comprenant une couche métallique de réflexion (3) pour la fonction miroir, et au moins une couche d'interface (4) entre le substrat et la couche métallique pour fabriquer un miroir coloré selon l'une des revendications 1 à 11, **caractérisée en ce que** la couche d'interface (4) comporte au moins une couche discontinue (40) métallique, et au moins une couche d'un matériau diélectrique (41) déposée sur la couche discontinue métallique, et éventuellement au moins une sous-couche diélectrique déposée sous la couche discontinue métallique, et **en ce que** l'on choisit la couleur du miroir en sélectionnant la nature et l'épaisseur nominale de la couches discontinue et la nature et l'épaisseur des surcouche(s) et sous-couche(s) de diélectrique.

## Patentansprüche

1. Farbiger Spiegel (1), in dem sich ein Benutzer spiegeln kann, mit einem Lichtreflexionsvermögen von mindestens 50 % im sichtbaren Bereich, wobei der Spiegel ein transparentes Substrat (2), eine reflektierende Metallschicht (3) und mindestens eine Zwischenschicht (4) zwischen dem Substrat und der Metallschicht umfasst, **dadurch gekennzeichnet, dass** die Zwischenschicht (4) mindestens eine diskontinuierliche Metallschicht (40), die so genannte diskontinuierliche Schicht, und mindestens eine auf der diskontinuierlichen Schicht abgeschiedene Schicht aus einem dielektrischen Material (41), die so genannte Oberschicht, umfasst und dass die diskontinuierliche Metallschicht (40) eine Nenndicke zwischen 0,1 und 8 nm aufweist.

2. Spiegel nach Anspruch 1, **dadurch gekennzeichnet, dass** die Zwischenschicht (4) mindestens eine dielektrische Unterschicht (42) aufweist, die unter der diskontinuierlichen Metallschicht (40) angeordnet ist, und dass diese Unterschicht (42) auf einem Material aus Metallnitriden oder -oxiden basiert.

3. Spiegel nach Anspruch 1 oder 2, **dadurch gekennzeichnet, dass** die Nenndicke der diskontinuierlichen Metallschicht (40), deren Material, die Dicke der dielektrischen Schicht (41) und deren Material, die Dicke und das Material der dielektrischen Unterschicht (42), wenn sie vorhanden ist, so ausgeführt sind, dass sie die Reflexionsfarbe des Spiegels definieren.

4. Spiegel nach einem der vorstehenden Ansprüche, **dadurch gekennzeichnet, dass** das Metall der diskontinuierlichen Schicht (40) allein oder in Kombination aus Silber, Gold, Kupfer, Aluminium, Nickel und Palladium ausgewählt ist.

5. Spiegel nach einem der vorstehenden Ansprüche, **dadurch gekennzeichnet, dass** die auf der diskontinuierlichen Metallschicht abgeschiedene dielektrische Oberschicht (41) und/oder die unter der diskontinuierlichen Schicht abgeschiedene dielektrische Unterschicht (42), wenn diese Unterschicht vorhanden ist, auf Basis von Oxid oder Nitrid von Metallen wie Mg, Al, Si, Ti, Cr, Zn, Zr, Nb, Ni, Mo, In, Sb, Sn, Ta, W oder Bi oder den Legierungen dieser Metalle hergestellt sind, insbesondere auf Basis von eventuell über- oder unternitriertem Siliziumnitrid Si₃N₄, eventuell über- oder unteroxidiertem Nioboxid mit der Bezeichnung Nb₂Oₓ, eventuell über- oder unteroxidiertem Titanoxid mit der Bezeichnung TiOₓ, eventuell über- oder unteroxidiertem Zinn-Zink-Mischoxid SnZnOₓ, mit Aluminium dotiertem Zinkoxid mit der Bezeichnung AZO, Zinn-Indium-Oxid ITO oder eventuell über- oder unteroxidiertem Siliziumoxid mit der Bezeichnung SiOₓ.

6. Spiegel nach einem der vorstehenden Ansprüche, **dadurch gekennzeichnet, dass** die auf der diskontinuierlichen Metallschicht abgeschiedene dielektrische Oberschicht (41) und/oder die unter der diskontinuierlichen Schicht abgeschiedene dielektrische Unterschicht, wenn diese Unterschicht vorhanden ist, eine Dicke zwischen 1 und 200 nm, vorzugsweise zwischen 5 und 50 nm, aufweisen.

7. Spiegel nach einem der Ansprüche 2 bis 6, **dadurch gekennzeichnet, dass** die dielektrische Unterschicht (42) ausgewählt ist aus eventuell über- oder unternitriertem Siliziumnitrid Si₃N₄, eventuell über- oder unteroxidiertem Nioboxid mit der Bezeichnung Nb₂Oₓ, eventuell über- oder unteroxidiertem Titanoxid mit der Bezeichnung TiOₓ, eventuell über- oder unteroxidiertem Zinn-Zink-Mischoxid mit der Bezeichnung SnZnOₓ oder Zinn-Indium-Oxid mit der Bezeichnung ITO, eventuell über- oder unteroxidiertem Siliziumoxid mit der Bezeichnung SiOₓ.

8. Spiegel nach einem der vorstehenden Ansprüche, **dadurch gekennzeichnet, dass** die dielektrische Oberschicht (41) aus eventuell über- oder unteroxidiertem Nioboxid mit der Bezeichnung Nb₂Oₓ oder eventuell über- oder unteroxidiertem Titanoxid mit der Bezeichnung TiOₓ ausgewählt ist.

9. Spiegel nach einem der vorstehenden Ansprüche, **dadurch gekennzeichnet, dass** er eine Haftschicht aufweist, die auf der Zwischenschicht abgeschieden ist, um die Haftung der reflektierenden Metallschicht des Spiegels zu erleichtern.

10. Spiegel nach einem der vorstehenden Ansprüche, **dadurch gekennzeichnet, dass** das Substrat (2) aus Glas besteht, vorzugsweise mit einer Dicke zwischen 2 und 4 mm, die reflektierende Metallschicht (3) aus Silber besteht, vorzugsweise mit einer Dicke zwischen 50 und 100 nm, die diskontinuierliche Schicht (40) aus Silber besteht, vorzugsweise mit einer Nenndicke zwischen 0,1 und 1,5 nm, und die dielektrische Oberschicht (41) eine Dicke zwischen 1 und 10 nm aufweist und vorzugsweise aus ITO, SnZnOₓ, Nb₂Oₓ oder TiOₓ besteht.

11. Spiegel nach einem der vorstehenden Ansprüche, **dadurch gekennzeichnet, dass** das Substrat (2) aus Glas besteht, vorzugsweise mit einer Dicke zwischen 2 und 4 mm, die reflektierende Metallschicht (3) aus Silber besteht, vorzugsweise mit einer Dicke zwischen 50 und 100 nm, die diskontinuierliche Schicht (40) aus Silber besteht, vorzugsweise mit einer Nenndicke zwischen 0,1 und 1,5 nm, die dielektrische Oberschicht (41) eine Dicke zwischen 1 und 10 nm aufweist und aus Nb₂Oₓ oder TiOₓ besteht.

12. Verfahren zur Herstellung eines farbigen Spiegels nach einem der vorstehenden Ansprüche, umfassend einen Schritt des Abscheidens mindestens einer Zwischenschicht auf einem Substrat, einen Schritt des Abscheidens einer reflektierenden Metallschicht auf dem beschichteten Substrat, eventuell das Abscheiden einer Schutzschicht auf der reflektierenden Metallschicht, **dadurch gekennzeichnet, dass** das Abscheiden der Zwischenschicht einen Schritt des Abscheidens einer diskontinuierlichen Metallschicht auf dem Substrat, einen Schritt des Abscheidens einer Oberschicht auf der diskontinuierlichen Schicht, wodurch eine dielektrische Schicht zwischen der diskontinuierlichen Schicht und der reflektierenden Metallschicht gebildet wird, wobei die Oberschicht vorzugsweise ein Metalloxid oder -nitrid ist, und eventuell einen Schritt des Abscheidens einer oder mehrerer Unterschichten umfasst, vorzugsweise aus Metalloxid oder -nitrid, die auf dem Substrat angeordnet sind und dem Abscheiden der diskontinuierlichen Schicht vorausgehen.

13. Verfahren nach vorstehendem Anspruch, **dadurch gekennzeichnet, dass** der Schritt des Abscheidens der Zwischenschicht darin besteht, in Abhängigkeit von der gewünschten Reflexionsfarbe des Spiegels das Material zu wählen und die Nenndicke der diskontinuierlichen Metallschicht anzupassen, das Material und die Dicke der dielektrischen Oberschicht zu wählen und anzupassen sowie das Material und die Dicke der dielektrischen Unterschicht zu wählen und anzupassen, wenn sie vorhanden ist.

14. Verfahren nach Anspruch 12 oder 13, **dadurch gekennzeichnet, dass** die dielektrische Oberschicht und/oder die dielektrische Unterschicht der Zwischenschicht durch Magnetronsputtern abgeschieden werden und dass für die Oberschicht und die Unterschicht, die in direktem Kontakt mit der diskontinuierlichen Metallschicht stehen und auf einem Metalloxid basieren, der Sauerstoffgehalt bei ihrem Abscheiden angepasst wird, um die Reflexionsfarbe des Spiegels zu verändern.

15. Verwendung eines transparenten Substrats (2) mit einer reflektierenden Metallschicht (3) für die Spiegelfunktion und mindestens einer Zwischenschicht (4) zwischen dem Substrat und der Metallschicht zur Herstellung eines farbigen Spiegels nach einem der Ansprüche 1 bis 11, **dadurch gekennzeichnet, dass** die Zwischenschicht (4) mindestens eine diskontinuierliche Metallschicht (40) und mindestens eine Schicht aus einem dielektrischen Material (41), die auf der diskontinuierlichen Metallschicht abgeschieden ist, und eventuell mindestens eine dielektrische Unterschicht, die unter der diskontinuierlichen Metallschicht abgeschieden ist, aufweist und dass die Farbe des Spiegels durch Wahl der Art und der Nenndicke der diskontinuierlichen Schicht und der Art und der Dicke der dielektrischen Überschicht(en) und Unterschicht(en) gewählt wird.

## Claims

1. A colored mirror (1) in which a user is likely to gaze at himself, having a light reflectivity of at least 50% in the visible range, said mirror comprising a transparent substrate (2), a reflective metal layer (3) and at least one interface layer (4) between the substrate and the metal layer, **characterized in that** the interface layer (4) comprises at least one discontinuous metal layer (40), termed discontinuous layer, and at least one layer of a dielectric material (41) deposited on the discontinuous layer, termed overlayer, and **in that** the discontinuous metal layer (40) has a nominal thickness comprised between 0.1 and 8 nm.

2. The mirror as claimed in claim 1, **characterized in that** the interface layer (4) comprises at least one dielectric underlayer (42) placed under the discontinuous metal layer (40) and **in that** this underlayer (42) is based on a material made of metal nitrides or oxides.

3. The mirror as claimed in claim 1 or 2, **characterized in that** the nominal thickness of the discontinuous metal layer (40), its material, the thickness of the dielectric layer (41) and its material, and the thickness and the material of the dielectric underlayer (42), when it is present, are such that they define the reflection color of the mirror.

4. The mirror as claimed in any one of the preceding claims, **characterized in that** the metal of the discontinuous layer (40) is chosen from, alone or in combination, silver, gold, copper, aluminum, nickel and palladium.

5. The mirror as claimed in any one of the preceding claims, **characterized in that** the dielectric overlayer (41) deposited on the discontinuous metal layer and/or the dielectric underlayer (42) deposited under the discontinuous layer, when this underlayer is present, are based on oxide or nitride of metals such as Mg, Al, Si, Ti, Cr, Zn, Zr, Nb, Ni, Mo, In, Sb, Sn, Ta, W or Bi or alloys of these metals, in particular based on silicon nitride Si₃N₄, which is optionally super- or sub-nitride, on niobium oxide, which is optionally super- or sub-oxide, denoted Nb₂Oₓ, on titanium oxide, which is optionally super- or sub-oxide, denoted TiOₓ, on mixed tin zinc oxide, which is optionally super- or sub-oxide SnZnOₓ, on aluminum-doped zinc oxide denoted AZO, on indium tin oxide denoted ITO or on silicon oxide, which is optionally super- or sub-oxide denoted SiOₓ.

6. The mirror as claimed in any one of the preceding claims, **characterized in that** the dielectric overlayer (41) deposited on the discontinuous metal layer and/or the dielectric underlayer deposited under the discontinuous layer, when this underlayer is present, have a thickness of between 1 and 200 nm, preferably between 5 and 50 nm.

7. The mirror as claimedin one of claims 2 to 6, **characterized in that** the dielectric underlayer (42) is chosen from silicon nitride Si₃N₄, which is optionally super- or sub-nitride, niobium oxide, which is optionally super- or sub-oxide denoted Nb₂Oₓ, titanium oxide, which is optionally super- or sub-oxide denoted TiOₓ, mixed tin zinc oxide, which is optionally super- or sub-oxide SnZnOₓ, indium tin oxide denoted ITO, and silicon oxide, which is optionally super- or sub-oxide denoted SiOₓ.

8. The mirror as claimed in one of the preceding claims, **characterized in that** the dielectric overlayer (41) is chosen from niobium oxide, which is optionally super- or sub-oxide denoted Nb₂Oₓ, or titanium oxide, which is optionally super- or sub-oxide denoted TiO_{x.}

9. The mirror as claimed in any one of the preceding claims, **characterized in that** it comprises a primer layer deposited on the interface layer in order to facilitate the adhesion of the reflective metal layer of the mirror.

10. The mirror as claimed in any one of the preceding claims, **characterized in that** the substrate (2) is made of glass, preferably of thickness between 2 and 4 mm, the reflective metal layer (3) is made of silver, preferably of thickness between 50 and 100 nm, the discontinuous layer (40) is made of silver, preferably of nominal thickness between 0.1 and 1.5 nm, and the dielectric overlayer (41) has a thickness of between 1 and 10 nm, and is preferably made of ITO, SnZnOₓ, Nb₂Oₓ or TiOₓ.

11. The mirror as claimed in one of the preceding claims, **characterized in that** the substrate (2) is made of glass, preferably of thickness between 2 and 4 mm, the reflective metal layer (3) is made of silver, preferably of thickness between 50 and 100 nm, the discontinuous layer (40) is made of silver, preferably of nominal thickness between 0.1 and 1.5 nm, and the dielectric overlayer (41) has a thickness of between 1 and 10 nm, and is made of Nb₂Oₓ or TiOₓ.

12. A process for manufacturing a colored mirror as claimed in one of the preceding claims, comprising a step of depositing at least one interface layer on a substrate, a step of depositing a reflective metal layer on the coated substrate, and optionally the depositing of a protective layer on the reflective metal layer, **characterized in that** the depositing of the interface layer comprises a step of depositing a discontinuous metal layer on the substrate, a step of depositing an overlayer on the discontinuous layer forming a dielectric layer between the discontinuous layer and the reflective metal layer, the overlayer preferably being a metal oxide or nitride, and optionally a step of depositing one or more underlayers, preferably of metal oxide or nitride, arranged on the substrate and prior to the depositing of the discontinuous layer.

13. The process as claimed in the preceding claim, **characterized in that** the step of depositing the interface layer consists, depending on the desired color in reflection of the mirror, in selecting the material and adjusting the nominal thickness of the discontinuous metal layer, in selecting and adjusting the material and the thickness of the dielectric overlayer, and also in selecting and adjusting the material and the thickness of the dielectric underlayer when it is present.

14. The process as claimed in claim 12 or 13, **characterized in that** the dielectric overlayer and/or the dielectric underlayer of the interface layer are deposited by magnetron sputtering and **in that**, for the overlayer and the underlayer which are in direct contact with the discontinuous metal layer and are based on a metal oxide, the oxygen content is adjusted during the depositing thereof in order to modify the color in reflection of the mirror.

15. The use of a transparent substrate (2) comprising a reflective metal layer (3) for the mirror function, and at least one interface layer (4) between the substrate and the metal layer in order to manufacture a colored mirror as claimed in one of claims 1 to 11, **characterized in that** the interface layer (4) comprises at least one discontinuous metal layer (40), and at least one layer of a dielectric material (41) deposited on the discontinuous metal layer, and optionally at least one dielectric underlayer deposited under the discontinuous metal layer, and **in that** the color of the mirror is chosen by selecting the nature and the nominal thickness of the discontinuous layer and the nature and the thickness of the dielectric overlayer(s) and underlayer(s).
